# DEMANDE DE BREVET EUROPEEN

(11) **EP 1 739 889 A1**
(43) Date de publication de la demande: **03.01.2007**
(21) Numéro de dépôt: 06300569.8
(22) Date de dépôt: 08.06.2006
(51) Int. Cl.: H04L 12/28, H04L 12/58

(54) **Methode d'accès à un document**

(30) Priorité: 27.06.2005 FR 0551767
(71) Demandeur: ALCATEL, 75008 Paris (FR)
(72) Inventeur: Skraba, Ryan, 75014, PARIS (FR); Legat, Bruno, 91090, LISSES (FR)
(74) Mandataire: Vigand, Régis Louis Michel

(57) **Abrégé**

L'invention concerne le domaine des méthodes d'accès à un document présentant un lien avec un message envoyé à un terminal mobile par l'intermédiaire d'un opérateur. C'est une méthode d'accès à un document comprenant : une étape d'envoi, à un premier terminal mobile (1), par un opérateur (3), d'un message présentant un lien avec un document ; une étape de consultation du message par un utilisateur, affichant, sur l'écran (14) du premier terminal mobile, un paramètre représentatif de la taille du document ; une étape de commande par l'utilisateur, au niveau de l'interface homme machine (13) du premier terminal mobile, d'association, par l'opérateur, d'une adresse au document ; une étape d'entrée, par l'utilisateur, au niveau de l'interface homme machine (21) d'un deuxième terminal (2) ayant une capacité supérieure au premier terminal mobile, de l'adresse associée au document ; une étape d'envoi au moins du document par l'opérateur vers le deuxième terminal ; une étape d'affichage au moins du document sur l'écran (20) du deuxième terminal.

## Description

L'invention concerne le domaine des méthodes d'accès à un document présentant un lien avec un message envoyé à un terminal mobile par l'intermédiaire d'un opérateur. Le courrier électronique (« e-mail » en langue anglaise) est très développé sur les grands terminaux de type poste fixe présentant des capacités importantes. Toutefois, au contraire des messages de type SMS (pour « Simple Message Service » en langue anglaise) ou de type MMS (pour « Multimedia Message Service » en langue anglaise), les messages de courrier électronique peuvent nécessiter des ressources qui dépassent les ressources disponibles sur un petit terminal de type terminal mobile présentant des capacités modérées. Malgré d'importants progrès réalisés, le rendu d'une page au format par exemple HTML sur l'écran d'un terminal mobile, téléphone portable ou assistant personnel numérique (PDA pour « personal digital assistant » en langue anglaise) est encore de piètre qualité. De plus, les capacités du terminal mobile en termes de bande passante, de taille mémoire ou de taille écran, peuvent soit se révéler nettement insuffisantes soit nécessiter une adaptation du contenu du message envoyé au terminal mobile avant de pouvoir le visualiser.

Selon un premier art antérieur, il est connu pour l'utilisateur de configurer, sur un terminal fixe disponible qui n'est pas le sien, en détail la messagerie de courrier électronique, ce qui est long et fastidieux.

Selon un deuxième art antérieur, il est connu pour l'utilisateur d'utiliser certaines fonctionnalités existant sur un terminal fixe disponible qui n'est pas le sien, lesdites fonctionnalités permettant de faire suivre des messages sans nécessiter une longue et fastidieuse configuration de la part de l'utilisateur. Toutefois, d'une part lesdites fonctionnalités ne sont pas toujours disponibles sur le terminal fixe qui se trouve être disponible pour l'utilisateur lors de la réception du message et d'autre part elles présentent souvent des déficiences au niveau sécurité.

Selon un troisième art antérieur, par exemple décrit dans la demande de brevet internationale WO 99/56459 ou dans la demande de brevet américaine US 2002/0094787, il est connu d'envoyer systématiquement une adresse de type URL indiquant où le message peut être consulté sur un terminal fixe présentant une connexion au réseau Internet au lieu du message lui-même. Cet art antérieur présente l'inconvénient de ne pas permettre à l'utilisateur de trier les messages et de les différencier entre ceux dont il veut, pour certaines raisons, consulter le contenu sur son terminal mobile, et ceux dont il veut, pour d'autres raisons, consulter le contenu sur un terminal fixe disponible, c'est-à-dire considéré comme accessible facilement pour lui de l'endroit où il se trouve lorsqu'il reçoit le message.

Le problème est à la fois de permettre à l'utilisateur de visualiser sur son terminal mobile rapidement le contenu de certains messages reçus sur son terminal mobile et de faire envoyer sur un terminal fixe disponible le contenu des autres messages. Le problème se pose en particulier avec les documents qui sont en pièce jointe des messages ou qui sont intégrés aux messages sous la forme d'un lien. Pour cela, l'invention, propose de laisser l'utilisateur maître du choix. A cette fin, lorsqu'un message est lié à un document, lequel pourrait éventuellement être trop volumineux pour être visualisé correctement sur l'écran d'un terminal mobile, un paramètre représentatif de la taille du document est affiché sur l'écran du terminal permettant à l'utilisateur de décider si oui ou non une adresse doit être associée au document, cette décision se traduisant soit par l'envoi par le terminal, vers un opérateur, d'une commande demandant à l'opérateur d'associer une adresse au document, soit par la visualisation directe du document, préalablement téléchargé, sur l'écran du terminal mobile.

L'invention concerne une méthode d'accès à un document comprenant : une étape d'envoi, à un premier terminal mobile, par un opérateur, d'un message présentant un lien avec un document ; une étape de consultation du message par un utilisateur, affichant, sur l'écran du premier terminal mobile, un paramètre représentatif de la taille du document ; une étape de commande par l'utilisateur, au niveau de l'interface homme machine du premier terminal mobile, d'association, par l'opérateur, d'une adresse au document ; une étape d'entrée, par l'utilisateur, au niveau de l'interface homme machine d'un deuxième terminal ayant une capacité supérieure au premier terminal mobile, de l'adresse associée au document ; une étape d'envoi au moins du document par l'opérateur vers le deuxième terminal ; une étape d'affichage au moins du document sur l'écran du deuxième terminal.

L'invention concerne aussi le terminal mobile spécialement adapté pour la mise en oeuvre de la méthode d'accès selon l'invention. L'invention concerne aussi un terminal mobile comprenant : un dispositif de réception apte à recevoir, d'un opérateur, un message présentant un lien avec un document ; une interface homme machine apte à recevoir une saisie d'un utilisateur ; un écran apte à afficher, sur commande de l'interface homme machine, suite à une saisie d'un utilisateur, un paramètre représentatif de la taille du document ; un dispositif d'émission apte à envoyer à un opérateur une commande d'association d'une adresse au document, suite à une saisie d'un utilisateur au niveau de l'interface homme machine.

L'invention concerne également l'opérateur de télécommunication spécialement adapté pour la mise en oeuvre de la méthode d'accès selon l'invention. L'invention concerne également un opérateur de télécommunication comprenant : un dispositif d'émission apte à envoyer, à un terminal mobile, un message présentant un lien avec un document ; un dispositif de réception apte à recevoir, d'un terminal mobile, une commande d'association d'une adresse au document ; un dispositif de traitement apte à associer une adresse au document ; le dispositif d'émission étant apte à envoyer, à un terminal mobile, l'adresse associée au document ; le dispositif de réception étant apte à recevoir, d'un terminal, l'adresse associée au document ; le dispositif d'émission étant apte à envoyer au moins le document à un terminal.

L'invention sera mieux comprise et d'autres particularités et avantages apparaîtront à l'aide de la description ci-après et des dessins joints, donnés à titre d'exemples, où :

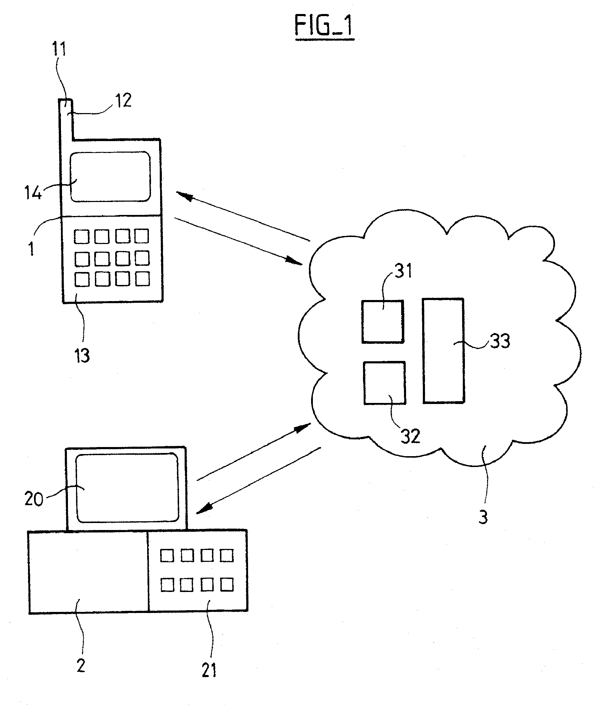

- la figure 1 représente schématiquement un exemple de système permettant la mise en oeuvre de la méthode d'accès selon l'invention et comprenant un terminal mobile, un terminal fixe et un opérateur de télécommunications.

La figure 1 représente schématiquement un exemple de système permettant la mise en oeuvre de la méthode d'accès selon l'invention et comprenant un terminal mobile, un terminal de préférence fixe et un opérateur de télécommunications. Le système comprend un terminal mobile 1, un terminal de préférence fixe 2, et un opérateur 3 de télécommunications symbolisé sous la forme d'un réseau de télécommunications. L'opérateur 3 est relié aussi bien au terminal mobile 1 qu'au terminal fixe 2 par l'intermédiaire de liaisons permettant une communication bidirectionnelle symbolisée par une double flèche. L'opérateur 3 dispose d'un dispositif d'émission 31, d'un dispositif de réception 32 et d'un dispositif de traitement 33. L'opérateur 3 peut faire intervenir de nombreux éléments d'un réseau de télécommunication, tout comme chacun de ses blocs fonctionnels 31, 32, 33. Le dispositif d'émission 31 peut par exemple intégrer plusieurs stations de base mobiles ainsi que des fournisseurs d'accès à réseau fixe. Le dispositif d'émission 31 peut présenter des éléments communs ou être confondu avec le dispositif de réception 32. Le terminal mobile 1 présente un dispositif d'émission 11, un dispositif de réception 12, une interface homme machine 13 permettant à l'utilisateur d'effectuer une saisie, un écran 14. Le dispositif d'émission 11 peut présenter des éléments communs ou être confondu avec le dispositif de réception 12, sous la forme d'une antenne par exemple. Le terminal de préférence fixe 2 comprend notamment un écran 20 et une interface homme machine 21 permettant à l'utilisateur d'effectuer une saisie au niveau du terminal 2. Le terminal 2 pourrait également être un terminal mobile, mais présenterait alors des capacités supérieures au terminal mobile 1. Le dispositif d'émission 31 dont dispose l'opérateur 3 peut envoyer des messages aussi bien au dispositif de réception 12 du terminal mobile 1 qu'au terminal 2. Le dispositif de réception 32 peut recevoir des messages en provenance aussi bien du dispositif d'émission 11 du terminal mobile 1 que du terminal 2. L'interface homme machine 13 du terminal mobile 1 permet à l'utilisateur de saisir des commandes au niveau du terminal mobile 1. L'écran 14 du terminal mobile 1 et l'écran 20 du terminal 2 permettent d'afficher le contenu de messages respectivement reçus par le terminal mobile 1 et par le terminal 2. Le dispositif de traitement 33 permet à l'opérateur de réaliser certains traitements sur des messages. Dans la suite et sauf mention contraire, le terminal 2 sera considéré comme terminal fixe sans que cela constitue une renonciation au caractère général, par exemple fixe ou mobile, du terminal 2.

Voici maintenant en liaison avec la figure 1 un exemple de mise en oeuvre de la méthode d'accès selon l'invention. La méthode d'accès selon l'invention comprend plusieurs étapes. Tout d'abord est réalisée une étape d'envoi, au terminal mobile 1, par l'opérateur 3, d'un message présentant un lien avec un document. Le document peut être par exemple sous forme de pièce jointe au message ou bien par exemple sous forme de simple lien inclus dans le message par l'intermédiaire duquel lien on peut accéder au document. Puis, est réalisée une étape de consultation du message par un utilisateur, affichant, sur l'écran 14 du terminal mobile 1, un paramètre représentatif de la taille du document. Le paramètre représentatif est par exemple soit directement la taille du document soit une information donnant indirectement à l'utilisateur soit la taille du document soit une simple estimation de la taille du document. A l'extrême, une simple indication du type, texte, image ou vidéo, peut suffire à l'utilisateur pour avoir une idée de la taille du document, ou bien encore une simple indication montrant si la taille du document est inférieure ou supérieure à un seuil de taille critique. Ce paramètre est affiché sur l'écran 14 du terminal mobile 1 pour que l'utilisateur en prenne connaissance et soit à même de décider si le document peut être directement visualisé sur l'écran 14 du terminal mobile 1 ou si l'utilisateur préfère visualiser ce document sur l'écran d'un terminal présentant des capacités plus importantes, par exemple sur l'écran 20 du terminal fixe 2. Dans le cas où il souhaite visualiser le document directement sur l'écran 14 du terminal mobile 1, l'utilisateur peut le faire directement sans recourir à la méthode d'accès selon l'invention. Dans le cas où il souhaite visualiser le document ailleurs, par exemple sur l'écran 20 du terminal fixe 2, l'utilisateur recourt à la méthode d'accès selon l'invention. Alors est réalisée une étape de commande par l'utilisateur, au niveau de l'interface homme machine 13 du terminal mobile 1, d'association, par l'opérateur 3, d'une adresse au document. L'utilisateur effectue une saisie au niveau de l'interface homme machine 13, laquelle est par exemple un clavier de touches ou un levier multidirectionnel avec bouton de validation. De préférence, l'étape de commande, et plus précisément l'étape de saisie par l'utilisateur, est réalisée par une simple pression sur un bouton ou par un simple clic sur un icône de la part de l'utilisateur. Cette saisie déclenche l'envoi par le dispositif d'émission 11 du terminal mobile 1 d'une commande à l'opérateur 3. A réception de cette commande par le dispositif de réception 32 de l'opérateur 3, le dispositif de traitement 33 de l'opérateur 3 associe une adresse, par exemple une URL, au document. Ainsi la consultation de ladite adresse par l'utilisateur permettra à celui-ci d'accéder au document. Pour ce faire, est réalisée une étape d'entrée, par l'utilisateur, au niveau de l'interface homme machine 21 d'un deuxième terminal ayant une capacité supérieure au premier terminal mobile, par exemple au niveau du terminal fixe 2, de l'adresse associée au document. Le terminal fixe 2 présente une capacité supérieure au terminal mobile 1 et ainsi que bien sûr une liaison de communication vers l'opérateur 3. L'utilisateur saisit l'adresse au niveau de l'interface homme machine 21 du terminal fixe 2. Après cette saisie, est réalisée une étape d'envoi du document par le dispositif d'émission 31 de l'opérateur 3 vers le terminal fixe 2. Pour cela, le dispositif de réception 32 de l'opérateur 3 est apte à recevoir, du terminal fixe 2, l'adresse associée au document. Cette étape d'envoi pourrait aussi être réalisée avant même la saisie de l'adresse par l'utilisateur au niveau de l'interface homme machine 21 du terminal fixe 2, à condition que l'opérateur 3 sache à l'avance l'identité du terminal fixe 2, ce qui ne sera pas le cas généralement. Enfin est réalisée une étape d'affichage du document sur l'écran 20 du terminal fixe 2. Dans cette dernière étape d'envoi et dans cette dernière étape d'affichage, au moins le document est envoyé et affiché, mais le message complet auquel était lié le document peut également être envoyé et affiché, l'utilisateur ayant alors accès au document au travers du message auquel le document est lié.

De préférence, entre l'étape de commande et l'étape d'entrée, est réalisée une étape d'envoi, par le dispositif d'émission 31 de l'opérateur 3 au dispositif de réception 12 du terminal mobile 1, de l'adresse associée au document. Ainsi, l'utilisateur connaîtra l'adresse afin de pouvoir la saisir au niveau de l'interface homme machine 21 du terminal fixe 2. Dans le cas où cette adresse est déjà connue de l'utilisateur, parce qu'elle est par exemple son adresse habituelle où il se fait envoyer les documents volumineux attachés aux messages qu'il reçoit, cette étape d'envoi n'est pas nécessaire. De manière avantageuse, l'étape d'envoi du document par le dispositif d'émission 31 de l'opérateur 3 vers le terminal fixe 2 n'est réalisée qu'après réalisation réussie d'une étape d'authentification du terminal mobile 1 par l'opérateur 3, et plus précisément par le dispositif de traitement 33 de l'opérateur 3.

Dans un mode de réalisation, l'adresse est d'une part toujours identique pour un même terminal mobile 1 et d'autre part accompagnée d'un mot de passe. Ainsi la sécurisation du document est assurée grâce au mot de passe. Dans un autre mode de réalisation, l'adresse est d'une part différente pour chaque message envoyé à un même terminal mobile 1 et d'autre part non accompagnée d'un mot de passe. Cette fois, c'est le caractère différent, par exemple aléatoire de l'adresse qui assurera la sécurisation du document.

De préférence, le document lié au message envoyé au terminal mobile 1 inclut une photo et/ou une vidéo. Ce peut être aussi une page de réseau par exemple Internet, ou tout autre type de document difficilement visualisable correctement sur l'écran d'un terminal mobile. L'utilisateur peut effectuer son choix en fonction du type de document, par exemple télécharger et afficher directement sur l'écran de son terminal mobile un document texte dont la taille sera de l'ordre d'une dizaine de kilo octets au plus tandis qu'il demandera une adresse, par exemple une URL, pour une photo dont la taille sera plutôt voisine de la centaine de kilo octets ou encore pour une vidéo dont la taille pourra dépasser le méga octets.

De préférence, le premier terminal mobile est un téléphone mobile ou un assistant personnel numérique. De manière avantageuse, le deuxième terminal est un ordinateur relié au réseau Internet. De manière préférentielle, le deuxième terminal a une capacité supérieure au premier terminal mobile, relativement à l'étendue de la bande passante et/ou à la capacité de stockage et/ou à la taille de l'écran. Plus la différence de capacités sera importante, plus le transfert du document vers le deuxième terminal présentera un intérêt pour l'utilisateur. Dans un exemple numérique préférentiel, la bande passante du premier terminal mobile est de l'ordre de la centaine de kilo bits tandis que celle du deuxième terminal peut être comprise entre la dizaine et la centaine de méga bits. De manière préférentielle également, la capacité de stockage du premier terminal mobile sera de l'ordre d'une centaine de méga bits tandis que celle du deuxième terminal atteindra ou dépassera la centaine de giga bits. La taille d'écran du deuxième terminal mobile sera de l'ordre d'un millier de pixels dans une direction multiplié par un millier de pixels dans une autre direction ; la taille d'écran du premier terminal n'est souvent qu'une petite fraction de la taille d'écran du deuxième terminal, par exemple de l'ordre de grandeur d'un dixième, voire d'un centième. Selon le type de paramètre, la capacité du deuxième terminal sera par exemple 10 fois, 100 fois, 1000 fois supérieure à celle du premier terminal mobile. En sus d'une capacité supérieure, le deuxième terminal, de préférence fixe, présentera souvent une flexibilité et une convivialité supérieures à celles du premier terminal mobile.

De préférence, l'étape d'envoi du document par l'opérateur vers le deuxième terminal n'est réalisée qu'après réalisation réussie d'une étape d'authentification du premier terminal mobile par l'opérateur. Ceci afin d'éviter les fraudes consistant pour un fraudeur à essayer d'accéder au niveau du deuxième terminal au contenu d'un document lié à un message dont ledit fraudeur n'est pas destinataire. Une autre méthode consiste à associer des adresses suffisamment longues, quoique simples, pour éviter des fraudes par attaque brutale consistant, pour le fraudeur, à essayer systématiquement toutes les adresses possibles ou plausibles. De manière avantageuse, dans un souci de sécurité supplémentaire et pour limiter la responsabilité de l'opérateur, après l'étape d'envoi du document par l'opérateur vers le deuxième terminal, aucune autre étape d'envoi du document par l'opérateur vers un troisième terminal, différent des deux premiers, n'est plus possible. De manière avantageuse, dans un souci de sécurité supplémentaire et pour limiter la responsabilité de l'opérateur, après l'étape d'envoi du document par l'opérateur vers le deuxième terminal, le document ne reste accessible sur le deuxième terminal que pendant un délai prédéterminé, par exemple 24 heures, ce délai pouvant aussi être choisi ou modifié par l'utilisateur. Après consultation du document par l'utilisateur, celui-ci peut le détruire pour en supprimer toute trace au niveau du deuxième terminal. Une fraude qui reste toutefois difficile à empêcher est l'éventuelle fraude du gestionnaire du deuxième terminal. L'utilisation de connexions SSL (pour « secure socket layer » en langue anglaise), correspondant au type de connexions reliant habituellement les terminaux fixes au réseau de télécommunications, rend de toutes manières la fraude plus difficile.

## Revendications

1. Méthode d'accès à un document comprenant :
- une étape d'envoi, à un premier terminal mobile (1), par un opérateur (3), d'un message présentant un lien avec un document ;
- une étape de consultation du message par un utilisateur, affichant, sur l'écran (14) du premier terminal mobile, un paramètre représentatif de la taille du document ;
- une étape de commande par l'utilisateur, au niveau de l'interface homme machine (13) du premier terminal mobile, d'association, par l'opérateur, d'une adresse au document ;
- une étape d'entrée, par l'utilisateur, au niveau de l'interface homme machine (21) d'un deuxième terminal (2) ayant une capacité supérieure au premier terminal mobile, de l'adresse associée au document ;
- une étape d'envoi au moins du document par l'opérateur vers le deuxième terminal ;
- une étape d'affichage au moins du document sur l'écran (20) du deuxième terminal.

2. Méthode d'accès à un document selon la revendication 1, **caractérisée en ce qu'**elle comporte, entre l'étape de commande et l'étape d'entrée, une étape d'envoi, par l'opérateur au premier terminal mobile, de l'adresse associée au document.

3. Méthode d'accès à un document selon l'une quelconque des revendications précédentes, **caractérisée en ce que** le premier terminal mobile est un téléphone mobile ou un assistant personnel numérique et **en ce que** le deuxième terminal est un ordinateur relié au réseau Internet.

4. Méthode d'accès à un document selon l'une quelconque des revendications précédentes, **caractérisée en ce que** le deuxième terminal a une capacité supérieure au premier terminal mobile, relativement à l'étendue de la bande passante et/ou à la capacité de stockage et/ou à la taille de l'écran.

5. Méthode d'accès à un document selon l'une quelconque des revendications précédentes, **caractérisée en ce que** le document inclut une photo et/ou une vidéo.

6. Méthode d'accès à un document selon l'une quelconque des revendications 1 à 5, **caractérisée en ce que** l'adresse est d'une part toujours identique pour un même premier terminal mobile et d'autre part accompagnée d'un mot de passe.

7. Méthode d'accès à un document selon l'une quelconque des revendications 1 à 5, **caractérisée en ce que** l'adresse est d'une part différente pour chaque message envoyé à un même terminal mobile et d'autre part non accompagnée d'un mot de passe.

8. Méthode d'accès à un document selon l'une quelconque des revendications précédentes, **caractérisée en ce que** l'étape de commande est réalisée par une simple pression sur un bouton ou par un simple clic sur un icône.

9. Méthode d'accès à un document selon l'une quelconque des revendications précédentes, **caractérisée en ce que** l'étape d'envoi du document par l'opérateur vers le deuxième terminal n'est réalisée qu'après réalisation réussie d'une étape d'authentification du premier terminal mobile par l'opérateur.

10. Méthode d'accès à un document selon la revendication 9, **caractérisée en ce que**, après l'étape d'envoi du document par l'opérateur vers le deuxième terminal, aucune autre étape d'envoi du document par l'opérateur vers un troisième terminal n'est plus possible.

11. Méthode d'accès à un document selon l'une quelconque des revendications 9 à 10, **caractérisée en ce que**, après l'étape d'envoi du document par l'opérateur vers le deuxième terminal, le document ne reste accessible sur le deuxième terminal que pendant un délai prédéterminé.

12. Terminal mobile comprenant :
- un dispositif de réception (12) apte à recevoir, d'un opérateur, un message présentant un lien avec un document ;
- une interface homme machine (13) apte à recevoir une saisie d'un utilisateur ;
- un écran (14) apte à afficher, sur commande de l'interface homme machine, suite à une saisie d'un utilisateur, un paramètre représentatif de la taille du document ;
- un dispositif d'émission (11) apte à envoyer à un opérateur une commande d'association d'une adresse au document, suite à une saisie d'un utilisateur au niveau de l'interface homme machine.

13. Opérateur de télécommunication comprenant :
- un dispositif d'émission (31) apte à envoyer, à un terminal mobile, un message présentant un lien avec un document ;
- un dispositif de réception (32) apte à recevoir, d'un terminal mobile, une commande d'association d'une adresse au document ;
- un dispositif de traitement (33) apte à associer une adresse au document ;
- le dispositif d'émission étant apte à envoyer, à un terminal mobile, l'adresse associée au document ;
- le dispositif de réception étant apte à recevoir, d'un terminal, l'adresse associée au document ;
- le dispositif d'émission étant apte à envoyer au moins le document à un terminal.
